# FASCICULE DE BREVET EUROPEEN

(11) **EP 1 463 172 B1**
(45) Date de publication et mention de la délivrance du brevet: **29.12.2010**
(21) Numéro de dépôt: 04447077.1
(22) Date de dépôt: 26.03.2004
(51) Int. Cl.: H02B 13/025

(54) **Installation de commutation électrique**
Elektrische Schaltanlage
Electrical switchgear

(30) Priorité: 26.03.2003 BE 200300196
(43) Date de publication de la demande: 29.09.2004
(73) Titulaire: Het Veer NV, 9850 Nevele (BE)
(72) Inventeur: Vandoorne, Rik, B-9850 Nevele (BE)
(74) Mandataire: Quintelier, Claude

(56) Documents cités:
- DE-A- 2 458 497
- DE-A- 4 111 586
- DE-U- 7 505 183

## Description

La présente invention concerne une cabine électrique agencée pour recevoir au moins un conducteur d'électricité capable de transporter une alimentation en électricité de haute ou moyenne tension, ladite cabine étant équipée d'un premier dispositif de mise automatique à la terre dudit au moins un conducteur en cas de survenance d'un arc électrique à partir dudit conducteur, ladite cabine étant également pourvue d'une paroi comprenant au moins un évent de décompression, ledit au moins un évent étant relié à l'aide d'un membre flexible audit premier dispositif de telle façon à actionner le premier dispositif pour mettre à la terre ledit conducteur en cas d'ouverture dudit évent sous l'effet de l'onde de choc provoquée par la survenance dudit arc électrique dans la cabine.

Une telle cabine électrique est connue de la demande de brevet DE 4111586. La cabine connue comporte trois chambres, à savoir une chambre pour le jeu de barres auxquelles les différents conducteurs sont chaque fois reliés, une chambre pour recevoir la tête des conducteurs et une chambre pour l'interrupteur à coupure de charge qui forme la jonction entre les conducteurs et le jeu de barres. Chaque chambre est pourvue d'une paroi comprenant au moins un évent de décompression qui s'ouvre sous l'effet de l'onde choc provoquée par la survenance d'un arc électrique dans la cabine. En effet, il arrive que des défaillances techniques ou la présence de corps étrangers dans la cabine provoquent le développement d'un arc électrique entre l'extrémité d'un conducteur et celle d'un autre conducteur ou d'une partie quelconque de la cabine. De tels arcs électriques sont d'une intensité très élevée, généralement supérieure à 10 kA, voire à 20 kA. Le développement d'un tel arc électrique dans la cabine s'accompagne de la libération d'une chaleur intense qui provoque la dilatation soudaine de l'air ou de tout autre gaz présent dans ladite cabine. Ce phénomène se traduit par une onde de choc d'une intensité telle que les parois et le contenu de la cabine peuvent être détruits par cette onde de choc. Afin de limiter les dégâts, voire les blessures à un opérateur, que peut provoquer l'onde de choc en question, il est connu de prévoir dans une paroi de la cabine des évents ou membranes de surpression, généralement constitués de volets métalliques dont la charnière est disposée horizontalement de sorte à permettre une ouverture vers le haut du volet qu'elle connecte à la paroi considérée de la cabine. Lors du développement accidentel d'un arc électrique dans cette cabine et de la propagation consécutive de l'onde de choque résultante, l'augmentation de pression dans la cabine provoque l'ouverture des évents dont elle est munie et dès lors la décompression de l'intérieur de la cabine. Ainsi, des dégâts importants à la cabine et d'éventuelles blessures à un opérateur peuvent être évités.

Cependant, la décompression de la cabine permise par la présence au niveau d'une de ses parois d'évents ne suffit pas à éteindre l'arc électrique se développant dans ladite cabine. Celui-ci peut au bout de moins d'une seconde détruire par carbonisation les éléments contenus dans la cabine et même provoquer l'incendie de celle-ci. C'est pourquoi le document DE 4111586 proposé de munir des cabines de type haute ou moyenne tension de dispositif automatiques de mise à la terre des extrémités des conducteurs alimentés en haute ou moyenne tension qui émergent dans de telles cabines, en cas de développement d'un arc électrique à l'intérieur de l'une d'elles. Grâce à cette mise à la terre, l'arc électrique se développant à partir d'une extrémité d'un conducteur est rapidement éteint car le courant électrique qui l'alimente est dirigé vers la terre qui l'absorbe.

Pour permettre une mise à la terre lorsqu'un tel arc est produit, la cabine suivant l'art antérieur prévoit de relier, à l'aide d'un membre flexible, chaque évent au dispositif de mise à la terre qui se trouve dans la chambre à laquelle appartient l'évent. Ainsi l'ouverture de l'évent va provoquer la mise sous tension du membre flexible formé par un câble. La tension ainsi appliquée sur le câble va être transmise au dispositif de mise à la terre pour ainsi mettre le conducteur à la terre.

Un inconvénient des cabines connues est que le dispositif de mise à la terre est souvent trop lent à réagir, laissant ainsi au feu, allumé par l'arc, le temps de se propager à l'intérieur de la cabine et de causer, malgré tout, d'important dégâts.

L'invention a pour but de réaliser une cabine électrique munie de dispositifs de mise à la terre qui permettent de réagir plus rapidement à la survenance dudit arc électrique et de mettre plus rapidement le ou les conducteurs à la terre.

A cette fin une cabine suivant l'invention est **caractérisée en ce que** la cabine comprend un deuxième dispositif de mise à la terre dudit au moins un conducteur, lequel deuxième dispositif comprend au moins un premier bras conducteur pouvant être déplacé sous l'action d'un premier moyen entre une première position dans laquelle ledit premier bras ne contacte pas ledit au moins un conducteur et une seconde position dans laquelle une extrémité dudit premier bras contacte une extrémité dudit au moins un conducteur, ledit premier moyen étant accessible depuis l'extérieur de la cabine, ledit deuxième dispositif étant pourvu d'un premier élément de verrouillage agencé pour verrouiller l'aces à la cabine lorsque ledit deuxième dispositif se trouve en sa première position, lesdits premier et deuxième dispositifs étant agencés pour fonctionner indépendamment l'un de l'autre.

Il a en effet été constaté que la lenteur des dispositifs de mise à la terre connus était essentiellement due au fait que les dispositifs connus combinaient la mise à le terre automatique en cas de survenance d'un arc et une mise à la terre manuelle en cas d'accès à la cabine par du personnel qualifié. L'art antérieur (voir colonne 3 lignes 50 à 60 de DE 4111586) enseigne d'ajouter la commande automatique à l'aide dudit câble à la commande manuelle du dispositif de mise à la terre qui est de tout façon présent dans la cabine. Ce couplage rend le dispositif lent. Le fait d'avoir un premier dispositif, qui est activé en cas de survenance d'un arc électrique, et un deuxième dispositif de mise à la terre, qui est activé à l'aide du premier moyen accessible depuis l'extérieur de la cabine, permet de dédoubler la commande automatique de la commande manuelle. Le premier dispositif est ainsi entièrement logé à l'intérieur de la cabine et il ne faut pas prévoir un mécanisme d'accès depuis l'extérieur. Ceci permet de simplifier le premier dispositif, le rendant ainsi plus efficace et rapide. Le premier et deuxième dispositif sont ainsi totalement indépendants l'un de l'autre, ce qui a pour conséquence que le mécanisme de fonctionnement de l'un n'interfère pas avec celui de l'autre.

Une première forme de réalisation préférentielle d'une cabine suivant l'invention est **caractérisée en ce qu**'elle comporte un interrupteur à coupure en charge agencé pour être relié à ladite une extrémité dudit au moins un conducteur, ledit deuxième dispositif étant pourvu d'un deuxième élément de verrouillage relié audit interrupteur et agencé pour verrouiller ledit deuxième dispositif lorsque ledit interrupteur est branché dans une position où le courant électrique circule à travers l'interrupteur et pour déverrouiller ledit deuxième dispositif lorsque ledit interrupteur est branché dans une position où le courant électrique ne circule plus à travers l'interrupteur. Ceci augmente la sécurité car la mise à la terre ne peut se faire qu'après que le courant est débranché à l'aide de l'interrupteur.

Une deuxième forme de réalisation préférentielle d'une cabine suivant l'invention est **caractérisée en ce que** chaque deuxième bras conducteur est constitué de deux éléments sensiblement rectilignes agencés de sorte à constituer un coude, dans la première position (A) d'un bras conducteur, celui des deux éléments sensiblement rectilignes constituant ledit bras qui comprend l'extrémité de ce dernier qui, dans la seconde position (B) dudit bras contacte une extrémité d'un conducteur, est tangent à un cercle dont le centre (C) est constitué de l'extrémité dudit conducteur et dont le rayon (r) est choisi, en fonction de la tension du courant alimentant ledit conducteur, pour qu'aucun arc électrique ne puisse survenir entre ledit conducteur et le bras et en ce que l'autre élément dudit bras est soit tangent soit extérieur audit cercle. Ceci permet un déclenchement du premier dispositif en un temps qui est inférieur à 50 ms.

L'invention va à présent être décrite plus en détails au travers d'un exemple de réalisation non limitatif de la portée de ladite invention et en référence aux figures jointes, dans lesquelles :
La fig. 1a est une vue de face d'une cabine moyenne tension comprenant un dispositif selon l'invention ;
La fig. 1b est une vue de profil de la cabine représentée à la fig. 1a ;
La fig. 2 est une vue d'un bras conducteur d'un dispositif selon l'invention, dans la première et seconde position dudit bras ; et
Les figs. 3 (a et b) sont des vues en coupe transversale, à travers la cabine.

Dans les dessins une même référence a été attribué à un même élément ou à un élément analogue.

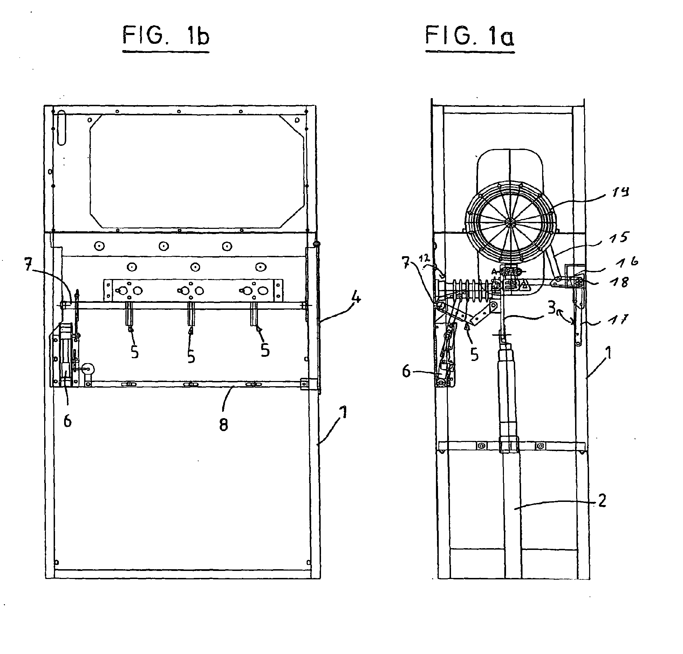

Aux figs. 1a et 1b est représentée une cabine électrique moyenne tension 1 dans laquelle émerge l'extrémité 3 d'un conducteur 2 et de deux autres conducteurs (non représentés) agencés pour être alimenté en moyenne tension. En général on distingue soit différente chambres séparées pour chaque cabine, soit un ensemble de plusieurs cabines. En effet pour l'électricité de haute ou moyenne tension on distingue une chambre ou cabine pour recevoir la tête de chaque conducteur, c'est à dire la fin de la ligne de haute ou moyenne tension, une chambre pour l'interrupteur à coupure de charge qui sépare le conducteur du jeu de barre et une chambre de protection où est situé le transformateur ainsi que des fusibles. La cabine suivant l'invention est applicable pour chacune desdites chambres ou cabines individuelles.

La cabine 1 est munie d'un évent 4 de décompression permettant de la décompresser en cas de survenance d'un arc électrique à partir du conducteur 2 ou de l'un des deux autres conducteurs. La cabine 1 est également pourvue d'un premier dispositif 12 de mise à la terre de chaque conducteur 2 lorsque l'arc électrique en question se développe dans la cabine 1. Le premier dispositif peut agir soit sur l'ensemble des conducteurs, soit on peut prévoir un premier dispositif par conducteur. Ledit premier dispositif de mise à la terre comprend un deuxième bras 6 formé par trois bras conducteurs pouvant pivoter autour d'un axe 7 sous l'action d'un deuxième moyen formé par exemple par un ressort 6, en moins de 50 milliseconde, entre une première position dans laquelle le ressort 6 est dans un état comprimé et aucun des deuxièmes bras 5 ne contacte le conducteur 2 ni un des deux autres conducteurs et une seconde position dans laquelle le ressort 6 est dans un état relâché et une extrémité de chaque bras 5 contacte l'extrémité du conducteur 2 ou d'un des deux autres conducteurs. Un câble flexible 8 connecte le ressort 6 à l'évent 4 et est agencé pour provoquer le passage de l'état comprimé du ressort 6 à son état relâché en cas d'ouverture dudit évent 4 sous l'effet de l'onde de choc provoquée par la survenance de l'arc électrique dans la cabine 1.

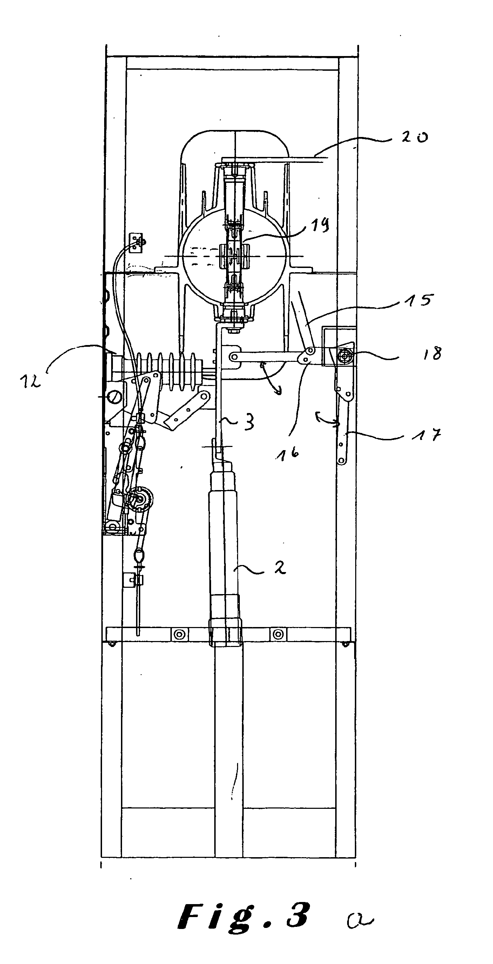

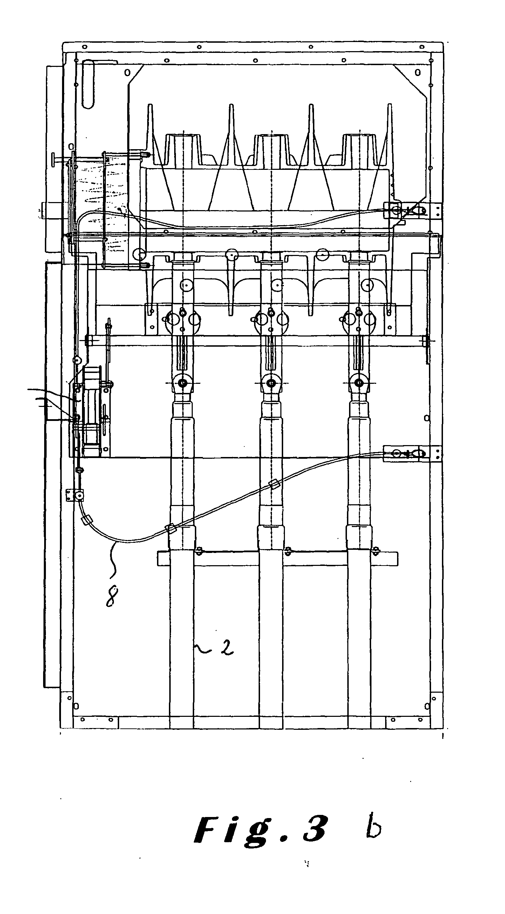

Comme illustré aux figures 1a et 3a la cabine comporte également un deuxième dispositif 16 de mise à la terre. Le premier 12 et deuxième 16 dispositif sont de préférence placés de part et d'autre du conducteur 2. Le premier dispositif 12 étant de préférence placé près de la paroi de la cabine opposée à celle où est monté l'évent 4. Le deuxième dispositif 16 étant lui, de préférence, monté sur une partie frontale de la cabine pour ainsi faciliter son accessibilité au personnel qualifié. Les premier et deuxième dispositifs sont agencés pour fonctionner de façon indépendante l'un de l'autre.

Le deuxième dispositif de mise à la terre comporte au moins un premier bras conducteur 17 monté de façon pivotable autour d'un axe 18. Un premier moyen 15, par exemple formé par un levier en matière isolante à l'électricité ou au moins pourvu d'un manche isolant à l'électricité permet de déplacer le premier bras 17 entre une première position dans laquelle ledit premier bras ne contacte pas le conducteur 2 (position vers le bas dans la figure 3a) et une seconde position dans laquelle une extrémité du premier bras 17 contacte une extrémité du conducteur 2, le mettant ainsi à la terre. Le premier moyen est accessible depuis l'extérieur de la cabine pour permettre ainsi au personnel qualifié de commander le deuxième dispositif depuis l'extérieur de la cabine. Ainsi le personnel peut d'abord mettre le conducteur à la terre avant de pénétrer dans la cabine.

Le deuxième dispositif est pourvu d'un premier élément de verrouillage permettant de verrouiller l'accès à la cabine lorsque ledit deuxième dispositif se trouve en sa première position. Ceci est par exemple réalisé par couplage du deuxième dispositif à la serrure de la cabine. Le premier moyen 15 entraînant alors à la fois le premier bras 17 et la serrure de la cabine. Bien entendu un verrou séparé de la serrure peut également être utilisé. De ce fait le personnel qualifié devra d'abord mettre le conducteur à la terre en commandant le premier moyen 15, qui à son tour va déverrouiller la porte, pour pouvoir accéder à l'intérieur de la cabine. Une meilleure sécurité du personnel est ainsi garantie. De plus, puisque le premier dispositif 12 est indépendant du deuxième dispositif 16 la commande du premier dispositif ne sera pas entravée par celle du deuxième qui doit également déverrouiller la porte d'accès. Une fonction plus rapide du premier dispositif est ainsi obtenue.

La cabine comporte également un interrupteur 19 à coupure en charge placé entre le conducteur 2 et le jeu de barres 20. De préférence le deuxième dispositif est pourvu d'un deuxième élément de verrouillage relié audit interrupteur 19 et agencé pour verrouiller ledit deuxième dispositif lorsque l'interrupteur est branché dans une position où le courant électrique circule à travers l'interrupteur. Ceci est par exemple réalisé à l'aide d'une tringle qui relie le premier moyen 15 à l'interrupteur 19. La tringle bloque le premier moyen si l'interrupteur est en position ouverte permettant au courant d'atteindre les barres 20. Lorsque l'interrupteur est placé en position fermée, sa rotation va entraîner celle de la tringle qui va ainsi déverrouiller le premier moyen permettant ainsi d'actionner le deuxième dispositif. On évite ainsi une mise à la terre du conducteur lorsque l'interrupteur 19 est en position ouverte.

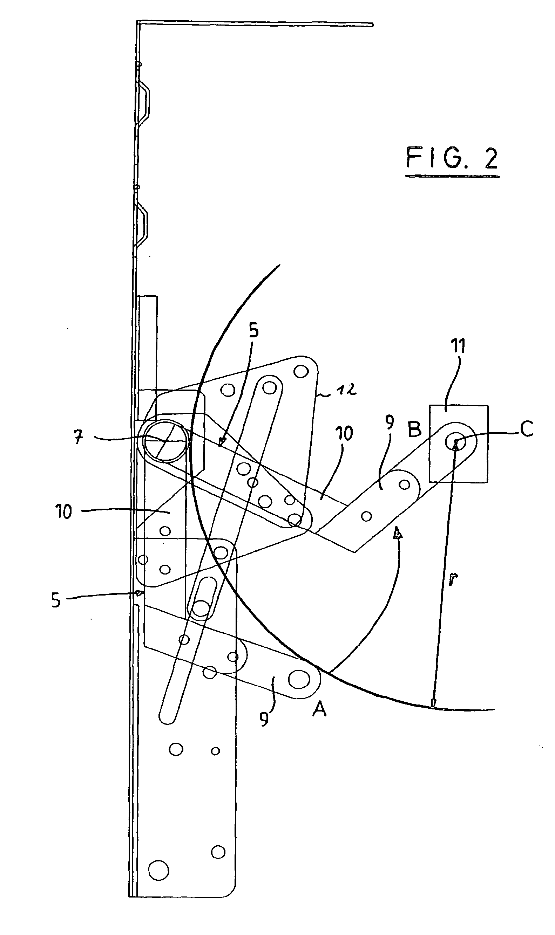

A la fig. 2 est représenté un deuxième bras conducteur 5 du premier dispositif 12 de mise automatique à la terre selon l'invention. Le bras 5 est constitué de deux éléments 9, 10 sensiblement rectilignes agencés de sorte à constituer un coude. Comme l'illustre la fig. 2, dans la première position A du bras conducteur 5, l'élément sensiblement rectiligne 9 qui comprend l'extrémité du deuxième bras 5, est tangent à un cercle dont le centre C est constitué de l'extrémité 11 dudit conducteur. Le rayon r de ce cercle est choisi, en fonction de la tension du courant alimentant ledit conducteur, pour qu'aucun arc électrique ne puisse survenir entre ledit conducteur et le bras 5. L'autre élément 10 du deuxième bras 5 étant, dans l'exemple illustré, également tangent audit cercle, mais pourrait aussi lui être extérieur. Lorsque le premier dispositif est dans sa seconde position B, l'élément 9 contacte la borne 11 disposée à l'extrémité d'un conducteur (non représenté). Chaque bras conducteur 5 est métallique, l'élément 9 sensiblement rectilignes du bras 5 qui comprend l'extrémité de ce dernier qui dans la seconde position B dudit bras 5 contacte la borne, est constitué d'un métal davantage conducteur que l'autre élément 10 dudit bras, en l'espèce du cuivre. Le fait que l'élément 9 est tangent audit cercle permet une transition rapide en moins de 50 ms dudit bras entre sa position A et B.

Il est à noter que le dispositif selon l'invention peut être utilisé dans une cabine contenant de l'air mais également dans une enceinte emplie d'un autre gaz tel que le SF₆.

## Revendications

1. Cabine électrique (1) agencée pour recevoir au moins un conducteur (2) d'électricité capable de transporter une alimentation en électricité de haute ou moyenne tension, ladite cabine étant équipée d'un premier dispositif (12) de mise automatique à la terre dudit au moins un conducteur en cas de survenance d'un arc électrique à partir dudit conducteur, ladite cabine étant également pourvue d'une paroi comprenant au moins un évent (4) de décompression, ledit au moins un évent (4) étant relié à l'aide d'un membre flexible (8) audit premier dispositif de telle façon à actionner le premier dispositif pour mettre à la terre ledit conducteur en cas d'ouverture dudit évent (4) sous l'effet de l'onde de choc provoquée par la survenance dudit arc électrique dans la cabine (1), **caractérisé en ce que** la cabine comprend un deuxième dispositif (16) de mise à la terre dudit au moins un conducteur, lequel deuxième dispositif comprend au moins un premier bras conducteur (17) pouvant être déplacé sous l'action d'un premier moyen (15) entre une première position dans laquelle ledit premier bras (17) ne contacte pas ledit au moins un conducteur (2) et une seconde position dans laquelle une extrémité dudit premier bras (17) contacte une extrémité (3) dudit au moins un conducteur (2), ledit premier moyen (15) étant accessible depuis l'extérieur de la cabine, ledit deuxième dispositif étant pourvu d'un premier élément de verrouillage agencé pour verrouiller l'aces à la cabine lorsque ledit deuxième dispositif se trouve en sa première position, lesdits premier et deuxième dispositifs étant agencés pour fonctionner indépendamment l'un de l'autre.

2. Cabine suivant la revendication 1, **caractérisée en ce qu'**elle comporte un interrupteur (19) à coupure en charge agencé pour être relié à ladite une extrémité (3) dudit au moins un conducteur (2), ledit deuxième dispositif étant pourvu d'un deuxième élément de verrouillage relié audit interrupteur et agencé pour verrouiller ledit deuxième dispositif lorsque ledit interrupteur est branché dans une position où le courant électrique circule à travers l'interrupteur et pour déverrouiller ledit deuxième dispositif lorsque ledit interrupteur est branché dans une position où le courant électrique ne circule plus à travers l'interrupteur.

3. Cabine suivant la revendication 1 ou 2, **caractérisée en ce que** le premier dispositif comprend au moins un deuxième bras conducteur (5) pouvant être déplacé sous l'action d'un deuxième moyen (6), entre une première position (A) dans laquelle ledit deuxième bras (5) ne contacte pas ledit au moins un conducteur (2) et une seconde position (B) dans laquelle une extrémité dudit deuxième bras (5) contacte ladite extrémité (3) dudit au moins un conducteur (2), lequel deuxième moyen (6) comprend un ressort, et **en ce que** le deuxième bras conducteur (5) est agencé pour pivoter autour d'un axe (7) sous l'action dudit ressort, entre ladite première position (A) du bras conducteur (5) dans laquelle ledit ressort est dans un état comprimé et ladite seconde position (B) du bras conducteur (5) dans laquelle ledit ressort est dans un état relâché.

4. Cabine suivant l'une des revendications 1 à 3, **caractérisée en ce qu'**elle est agencée pour recevoir une extrémité (3) de chacun d'une pluralité de conducteurs (2), et **en ce que** ledit premier dispositif comprend une pluralité de bras conducteurs (5) dont chacun est agencé pour pivoter autour dudit axe (7) sous l'action dudit deuxième moyen (6) et contacter une extrémité (3) d'un dit conducteur (2).

5. Cabine suivant la revendication 3 ou 4, **caractérisée en ce que** chaque deuxième bras conducteur (5) est constitué de deux éléments (9,10) sensiblement rectilignes agencés de sorte à constituer un coude, dans la première position (A) d'un deuxième bras conducteur (5), celui des deux éléments (9,10) sensiblement rectilignes constituant ledit deuxième bras (5) qui comprend l'extrémité de ce dernier qui dans la seconde position (B) dudit bras contacte une extrémité (3) d'un conducteur, est tangent à un cercle dont le centre (C) est constitué de l'extrémité (3) dudit conducteur et dont le rayon (r) est choisi, en fonction de la tension du courant alimentant ledit conducteur (2), pour qu'aucun arc électrique ne puisse survenir entre ledit conducteur (2) et le bras et **en ce que** l'autre élément dudit bras est soit tangent soit extérieur audit cercle.

6. Cabine suivant la revendication 4 ou 5, **caractérisée en ce que** chaque bras conducteur (5) est métallique et **en ce que** celui des deux éléments (9, 10) sensiblement rectilignes d'un bras (5) qui comprend l'extrémité de ce dernier qui dans la seconde position (B) dudit bras contacte une extrémité (3) d'un conducteur (2) est constitué d'un métal davantage conducteur que l'autre élément dudit bras (5).

7. Cabine suivant la revendication 6, **caractérisée en ce que** ledit métal est le cuivre.

## Claims

1. Electrical cubicle (1) arranged to receive at least one conductor (2) of electricity capable of transporting a high or medium voltage electricity supply, the said cubicle being equipped with a first device (12) for automatically earthing the said at least one conductor in the event of the occurrence of an electric arc from the said conductor, the said cubicle also being provided with a wall comprising at least one decompression vent (4), the said at least one vent (4) being connected by means of a flexible member (8) to the said first device so as to actuate the first device in order to earth the said conductor in the event of opening of the said vent (4) under the effect of the shock wave caused by the occurrence of the said electric arc in the cubicle (1), **characterised in that** the cubicle comprises a second device (16) for earthing the said at least one conductor, the said second device comprising at least one first conductive arm (17) able to be moved under the action of a first means (15) between a first position in which the said first arm (17) does not contact the said at least one conductor (2) and a second position in which an end of the said first arm (17) contacts an end (3) of the said at least one conductor (2), the said first means (15) being accessible from the outside of the cubicle, the said second device being provided with a first locking element arranged to lock access to the cubicle when the said second device is in its first position, the said first and second devices being arranged to function independently of each other.

2. Cubicle according to claim 1, **characterised in that** it comprises a switch (19) cutting off under load, arranged to be connected to the said one end (3) of the said at least one conductor (2), the said second device being provided with a second locking element connected to the said switch and arranged to lock the said second device when the said switch is connected in a position where the electric current flows through the switch and to unlock the said second device when the said switch is connected in a position where the electric current no longer flows through the switch.

3. Cubicle according to claim 1 or 2, **characterised in that** the first device comprises at least one second conductive arm (5) able to be moved under the action of a second means (6), between a first position (A) in which the said second arm (5) does not contact the said at least one conductor (2) and a second position (B) in which one end of the said second arm (5) contacts the said end (3) of the said at least one conductor (2), the said second means (6) comprising a spring, and **in that** the second conductive arm (5) is arranged to pivot about an axis (7) under the action of the said spring, between the said first position (A) of the conductive arm (5) in which the said spring is in a compressed state and the said second position (B) of the conductive arm (5) in which the said spring is in a relaxed state.

4. Cubicle according to one of claims 1 to 3, **characterised in that** it is arranged to receive an end (3) of each of a plurality of conductors (2), and **in that** the said first device comprises a plurality of conductive arms (5), each of which is arranged to pivot about the said axis (7) under the action of the said means (6) and to contact one end (3) of a said conductor (2).

5. Cubicle according to claim 3 or 4, **characterised in that** each second conductive arm (5) consists of two substantially rectilinear elements (9, 10) arranged so as to constitute an elbow, in the first position (A) of a second conductive arm (5), the particular one of the two substantially rectilinear elements (9, 10) constituting the said second arm (5) that comprises the end of the latter that in the second position (B) of the said arm contacts one end (3) of a conductor, is tangent to a circle the centre (C) of which consists of the end (3) of the said conductor and the radius (r) of which is chosen, according to the voltage of the current supplying the said conductor (2), so that no electric arc can occur between the said conductor (2) and the arm and **in that** the other element of the said arm is either tangent or external to the said circle.

6. Cubicle according to claim 4 or 5, **characterised in that** each conductive arm (5) is metal and **in that** the particular one of the two substantially rectilinear elements (9, 10) of an arm (5) that comprises the end of the latter that in the second position (B) of the second arm contacts an end (3) of a conductor (2) consists of a metal that is more conductive than the other element of the said arm (5).

7. Cubicle according to claim 6, **characterised in that** the said metal is copper.

## Patentansprüche

1. Schaltschrank (1), der dafür ausgelegt ist, mindestens einen elektrischen Leiter (2) aufzunehmen, der in der Lage ist, elektrischen Strom für eine Hoch- oder Mittelspannungsversorgung zu transportieren, wobei der Schaltschrank mit einer ersten Vorrichtung (12) zur automatischen Erdung des mindestens einen Leiters im Falle des Auftretens eines Lichtbogens von dem Leiter aus ausgerüstet ist, wobei der Schaltschrank außerdem mit einer Wand versehen ist, die mindestens eine Druckentlastungs-Entlüftungsöffnung (4) umfasst, wobei die mindestens eine Entlüftungsöffnung (4) mit Hilfe einer flexiblen Membran (8) mit der ersten Vorrichtung verbunden ist, derart, dass im Falle des Öffnens der Entlüftungsöffnung (4) unter der Einwirkung der Druckwelle, die durch das Auftreten des Lichtbogens in dem Schaltschrank (1) hervorgerufen wird, die erste Vorrichtung betätigt wird, um den Leiter zu erden, **dadurch gekennzeichnet, dass** der Schaltschrank eine zweite Vorrichtung (16) zur Erdung des mindestens einen Leiters umfasst, wobei die zweite Vorrichtung mindestens einen ersten leitenden Arm (17) umfasst, der unter der Wirkung eines ersten Mittels (15) zwischen einer ersten Position, in welcher der erste Arm (17) den mindestens einen Leiter (2) nicht kontaktiert, und einer zweiten Position, in welcher ein Ende des ersten Armes (17) ein Ende (3) des mindestens einen Leiters (2) kontaktiert, bewegt werden kann, wobei das erste Mittel (15) von außerhalb des Schaltschrankes zugänglich ist, wobei die zweite Vorrichtung mit einem ersten Verriegelungselement versehen ist, das dafür ausgelegt ist, den Zugang zu dem Schaltschrank zu verriegeln, wenn sich die zweite Vorrichtung in ihrer ersten Position befindet, wobei die erste und die zweite Vorrichtung dafür ausgelegt sind, unabhängig voneinander zu arbeiten.

2. Schaltschrank nach Anspruch 1, **dadurch gekennzeichnet, dass** er einen Lastschalter (19) aufweist, der dafür ausgelegt ist, mit dem einen Ende (3) des mindestens einen Leiters (2) verbunden zu werden, wobei die zweite Vorrichtung mit einem zweiten Verriegelungselement versehen ist, das mit dem Lastschalter verbunden ist und dafür ausgelegt ist, die zweite Vorrichtung zu verriegeln, wenn der Lastschalter in eine Position geschaltet ist, in welcher der elektrische Strom durch den Lastschalter fließt, und die zweite Vorrichtung zu entriegeln, wenn der Lastschalter in eine Position geschaltet ist, in welcher der elektrische Strom nicht mehr durch den Lastschalter fließt.

3. Schaltschrank nach Anspruch 1 oder 2, **dadurch gekennzeichnet, dass** die erste Vorrichtung mindestens einen zweiten leitenden Arm (5) umfasst, der unter der Wirkung eines zweiten Mittels (6) zwischen einer ersten Position (A), in welcher der zweite Arm (5) den mindestens einen Leiter (2) nicht kontaktiert, und einer zweiten Position (B), in welcher ein Ende des zweiten Armes (5) das Ende (3) des mindestens einen Leiters (2) kontaktiert, bewegt werden kann, wobei das zweite Mittel (6) eine Feder umfasst, und **dadurch**, dass der zweite leitende Arm (5) dafür ausgelegt ist, unter der Wirkung der Feder um eine Achse (7) zwischen der ersten Position (A) des leitenden Armes (5), in welcher die Feder sich in einem zusammengedrückten Zustand befindet, und der zweiten Position (B) des leitenden Armes (5), in welcher die Feder sich in einem entspannten Zustand befindet, zu schwenken.

4. Schaltschrank nach einem der Ansprüche 1 bis 3, **dadurch gekennzeichnet, dass** er dafür ausgelegt ist, ein Ende (3) eines jeden von mehreren Leitern (2) aufzunehmen, und **dadurch**, dass die erste Vorrichtung mehrere leitende Arme (5) umfasst, von denen jeder dafür ausgelegt ist, unter der Wirkung des zweiten Mittels (6) um die Achse (7) zu schwenken und ein Ende (3) eines der Leiter (2) zu kontaktieren.

5. Schaltschrank nach Anspruch 3 oder 4, **dadurch gekennzeichnet, dass** jeder zweite leitende Arm (5) aus zwei im Wesentlichen geradlinigen Elementen (9, 10) besteht, die derart angeordnet sind, dass sie in der ersten Position (A) eines zweiten leitenden Armes (5) einen Knickwinkel bilden, dass dasjenige der zwei im Wesentlichen geradlinigen, den zweiten Arm (5) bildenden Elemente (9, 10), welches das Ende dieses Letzteren umfasst, welches in der zweiten Position (B) des Armes ein Ende (3) eines Leiters kontaktiert, tangential zu einem Kreis ist, dessen Mittelpunkt (C) von dem Ende (3) des Leiters gebildet wird und dessen Radius (r) in Abhängigkeit von der Spannung des Stroms, mit dem der Leiter (2) gespeist wird, so gewählt ist, dass kein Lichtbogen zwischen dem Leiter (2) und dem Arm auftreten kann, und **dadurch**, dass das andere Element des Armes entweder tangential zu dem Kreis oder außerhalb desselben ist.

6. Schaltschrank nach Anspruch 4 oder 5, **dadurch gekennzeichnet, dass** jeder leitende Arm (5) metallisch ist, und **dadurch**, dass dasjenige der zwei im Wesentlichen geradlinigen Elemente (9, 10) eines Armes (5), welches das Ende dieses Letzteren umfasst, welches in der zweiten Position (B) des Armes ein Ende (3) eines Leiters (2) kontaktiert, aus einem Metall besteht, das stärker leitend ist als das andere Element des Armes (5).

7. Schaltschrank nach Anspruch 6, **dadurch gekennzeichnet, dass** das Metall Kupfer ist.
